(19)

Europäisches Patentamt

European Patent Office

Office européen des brevets

(11)  **EP 2 939 365 B1**

(12)  **EUROPEAN PATENT SPECIFICATION**

(45) Date of publication and mention
of the grant of the patent:
**27.04.2016  Bulletin 2016/17**

(21) Application number: **13824058.5**

(22) Date of filing: **23.12.2013**

(51) Int Cl.:
***H04L 12/18*** *(2006.01)*

(86) International application number:
**PCT/US2013/077380**

(87) International publication number:
**WO 2014/105773 (03.07.2014 Gazette 2014/27)**

(54) **DEVICES AND METHODS FOR MULTICAST**

MULTICAST-VORRICHTUNGEN UND -VERFAHREN

DISPOSITIFS ET PROCÉDÉS DE MULTIDIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2012  US 201213729498**

(43) Date of publication of application:
**04.11.2015  Bulletin 2015/45**

(73) Proprietor: **ALCATEL LUCENT
92100 Boulogne-Billancourt (FR)**

(72) Inventors:
 • **GOYAL, Suresh
   Murray Hill, NJ 07974-0636 (US)**
 • **ASHIKHMIN, Alexei
   Murray Hill, NJ 07974-0636 (US)**
 • **MARZETTA, Thomas
   Murray Hill, NJ 07974-0636 (US)**

 • **YANG, Hong
   Murray Hill, NJ 07974-0636 (US)**

(74) Representative: **Wetzel, Emmanuelle et al
   Alcatel Lucent
   Intellectual Property & Standards
   70430 Stuttgart (DE)**

(56) References cited:
   **US-A1- 2009 210 474**

 • **ALEXEI ASHIKHMIN ET AL: "Pilot contamination
   precoding in multi-cell large scale antenna
   systems", INFORMATION THEORY
   PROCEEDINGS (ISIT), 2012 IEEE
   INTERNATIONAL SYMPOSIUM ON, IEEE, 1 July
   2012 (2012-07-01), pages 1137-1141,
   XP032225441, DOI: 10.1109/ISIT.2012.6283031
   ISBN: 978-1-4673-2580-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

## BACKGROUND

Large-Scale Antenna Systems (LSAS) - also called "Massive MIMO", "Large-Scale MIMO", or "Hyper MIMO" - uses large arrays of service-antennas to transmit selectively and simultaneously high-throughput beams of information to a multiplicity of users. Thus, LSAS is a candidate for providing high-definition television (HDTV) to many subscribers simultaneously. The usual form of LSAS assigns distinct up-link pilot sequences to each subscriber so that unique estimates for the propagation channel between the service-antennas and each terminal can be obtained. However, the maximum number of terminals that can be served by this scheme is limited by the maximum number of orthogonal pilot sequences that can be created during a coherence interval. For example, a mobility of 2 meters/second implies, at a carrier frequency of 1.9 GHz, a maximum coherence interval of 40 milliseconds. For a channel delay-spread of 5 microseconds, there is room for, at most, 8,000 orthogonal pilot sequences. However, because it is not as useful to spend more than half of the coherence interval on pilot transmission, a conventional system serves, at most, 4,000 subscribers simultaneously. Thus, conventional systems are not well suited for high-density areas, where it is desired to serve a relatively large number of subscribers at a same time.

Document US 2009/0210474 A1 discloses a method and a system for sending the same data in multiple directions via directional transmission. Ashikhmin et al disclose in "Pilot Contamination Precoding in Multi-Cell Large Scale Antenna Systems" a concept for effective elimination of inter-cell interference in TDD LSAS systems.

## SUMMARY

At least one example embodiment relates to a method for supporting multicast for large scale antenna systems.

According to at least one example embodiment, the method includes assigning a pilot sequence to each program from among a plurality of programs such that each program has a unique pilot sequence, and broadcasting the unique pilot sequences for the plurality of programs.

At least one embodiment relates to a method of multicast for large scale antenna systems.

According to at least one example embodiment, a method includes receiving a composite pilot signal associated with a first set of subscriber units. The composite pilot signal may result from pilot sequences sent by the first set of subscriber units. The pilot sequences sent by the first set of subscriber units may be the same, apart from amplitude factors, and associated with a particular one of a plurality of programs. The method may further include determining a composite channel estimate based on the composite pilot signal and the assigned pilot sequence for the particular program. The method may also include transmitting the particular program based on the determined composite channel estimate.

At least one embodiment also relates to a multicast unit provided with large arrays of service-antennas.

According to at least one example embodiment, the multicast unit is configured to assign a pilot sequence to each program from among a plurality of programs such that each program has a unique pilot sequence, and the multicast unit is configured to broadcast the unique pilot sequences for the plurality of programs.

In another embodiment, the multicast unit is configured to receive a composite pilot signal associated with a first set of subscriber units. The composite pilot signal may result from pilot sequences sent by the first set of subscriber units. The pilot sequences sent by the first set of subscriber units may be the same, apart from amplitude factors, and associated with a particular one of a plurality of programs. The multicast unit may determine a composite channel estimate based on the composite pilot signal and the assigned pilot sequence for the particular program. The multicast unit may transmit the particular program based on the determined composite channel estimate.

## BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of example embodiments.

Fig. 1 is a diagram illustrating an example structure of multicast unit in a communications system, according to at least one example embodiment.

Fig. 2A is a flow chart illustrating an example operation of the multicast unit in Fig. 1, according to at least one example embodiment.

Fig. 2B is a flow chart illustrating an example operation of the multicast unit in Fig. 1, according to at least one example embodiment.

Fig. 3 is a flow chart illustrating an example operation of the multicast unit in Fig. 1, according to at least one example embodiment.

Figs. 4A-4B are flow charts illustrating example operations of a multicast unit in Fig. 1, according to some example embodiments.

Fig. 5 is a flow chart illustrating an example operation of the multicast unit in Fig. 1, according to at least one example embodiment.

Fig. 6 is a flow chart illustrating an example operation of the multicast unit in Fig. 1, according to at least one example embodiment.

Figs. 7 and 8 are graphs comparing per subscriber unit throughput of a conventional LSAS system to per subscriber unit throughput of an LSAS system according to at least one example embodiment.

## DETAILED DESCRIPTION OF EXAMPLE EMBODIMENTS

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. This invention may, however, be embodied in many alternate forms and should not be construed as limited to only the embodiments set forth herein.

Accordingly, while example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

In the following description, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at existing network elements (e.g., base stations, base station controllers, NodeBs, eNodeBs, etc.). Such existing hardware may include one or more Central Processing Units (CPUs), digital signal processors (DSPs), application-specific-integrated-circuits, field programmable gate arrays (FPGAs) computers or the like.

Although a flow chart may describe the operations as a sequential process, many of the operations may be performed in parallel, concurrently or simultaneously. In addition, the order of the operations may be rearranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium" or "computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

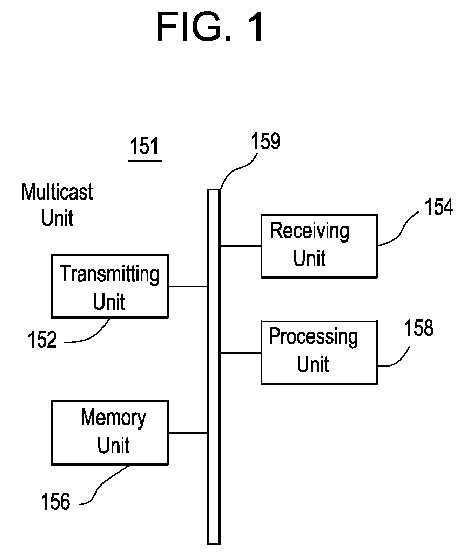

Fig. 1 is a diagram illustrating an example structure of multicast unit according to an example embodiment. According to at least one example embodiment, a multicast unit 151 may be configured for use in a communications system (e.g., a large scale antenna system (LSAS)). Referring to Fig. 1, the multicast unit 151 may include, for example, a data bus 159, a transmitting unit 152, a receiving unit 154, a memory unit 156, and a processing unit 158.

The transmitting unit 152, receiving unit 154, memory unit 156, and processing unit 158 may send data to and/or receive data from one another using the data bus 159. The transmitting unit 152 is a device that includes hardware and any necessary software for transmitting wireless signals including, for example, data signals, control signals, and signal strength/quality information via one or more wireless connections to other network elements in a communications system.

The receiving unit 154 is a device that includes hardware and any necessary software for receiving wireless signals including, for example, data signals, control signals, and signal strength/quality information via one or more wireless connections to other network elements in a communications network. The transmitting unit 152 and the receiving unit 154 may employ any well-known LSAS architecture.

The memory unit 156 may be any device capable of storing data including magnetic storage, flash storage, etc.

The processing unit 158 may be any device capable of processing data including, for example, a microprocessor configured to carry out specific operations based on input data, or capable of executing instructions included in computer readable code. For example, it should be understood that the modifications and methods described below may be stored on the memory unit 156 and implemented by the processing unit 158 within multicast unit 151.

Further, it should be understood that the below modifications and methods may be carried out by one or more of the above described elements of the multicast unit 151. For example, the receiving unit 154 may carry out steps of "receiving," "acquiring," and the like; transmitting unit 152 may carry out steps of "transmitting," "outputting," and the like; processing unit 158 may carry out steps of "determining," "generating", "correlating," "calculating," and the like; and memory unit 156 may carry out steps of "storing," "saving," and the like.

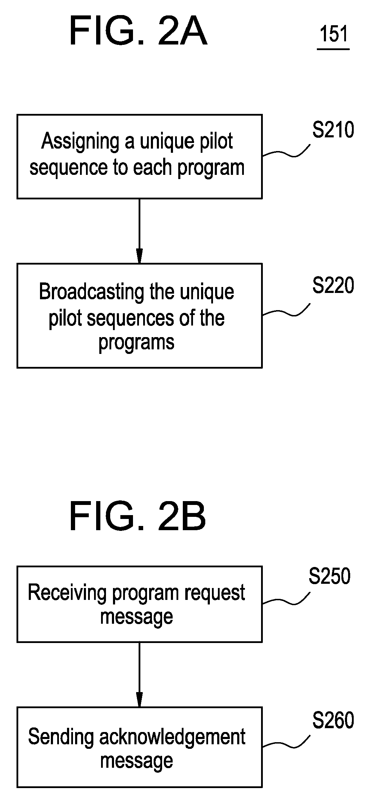

Fig. 2A is a flow chart illustrating an example operation of the multicast unit in Fig. 1, according to at least one example embodiment.

In step S210, the multicast unit 151 assigns a unique pilot sequence to each program from among multiple programs (e.g., audio/video programs, etc.) of a service provider. For example, the multicast unit 151 assigns pilot sequences such that each program has a different pilot sequence compared to other programs of the service provider. The multicast unit 151 may assign the unique pilot sequences such that the unique pilot sequences are orthogonal to one another.

In step S220 of Fig. 2, the multicast unit 151 broadcasts the unique pilot sequences of the programs to, for example, subscriber units. According to at least one example embodiment, the multicast unit 151 may perform step S220 at desired time intervals. As another example, the multicast unit 151 may broadcast the unique pilot sequences to a subscriber unit(s) in response to a request from the subscriber unit(s). Alternatively, the multicast unit 151 may broadcast the unique pilot sequences to the subscriber unit(s) automatically, and at regular time intervals.

According to at least one example embodiment, the multicast unit 151 may broadcast an anti-pilot pilot sequence for at least one of the unique pilot sequences. The anti-pilot sequence may have an amplitude factor and may have a sign opposite to that of the unique pilot sequence of the initial program. For example, the anti-pilot sequence may be an arithmetic opposite (i.e., algebraic opposite) of the unique pilot sequence for a particular program. The amplitude factor of the anti-pilot may be determined based on slow-fading coefficients known by the multicast unit 151.

The multicast unit 151 may broadcast the anti-pilot sequence or sequences in the same manner as described above in step S220 with respect to the pilot sequences. In one embodiment, however, an anti-pilot sequence is broadcast in response to a trigger (e.g. a request) from a subscriber unit.

Although step S220 has been described as being performed by the multicast unit 151, example embodiments are not limited thereto. For example, a central server may broadcast the unique pilot sequences for the programs to the subscriber units.

Fig. 2B is a flow chart illustrating an example operation of a multicast unit. As shown, in step S250, the multicast unit 151 receives a program request message from a subscriber unit. The program request message identifies a program that the subscriber unit desires to receive. In step S260, the multicast unit 151 sends an acknowledgement message, acknowledging receipt of the program request message. As will be appreciated, the multicast unit 151 may receive and respond to several such messages from different subscriber units. In response to the acknowledgement message, the subscriber unit will send the pilot sequence associated with the requested program.

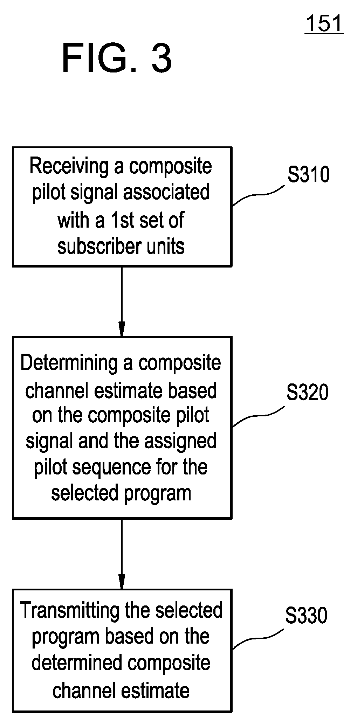

Fig. 3 is a flow chart illustrating an example operation of the multicast unit in Fig. 1, according to at least one example embodiment. The below described steps in Fig. 3 may be performed in combination with any or all of the steps in Figs. 2A and 2B.

In step S310, the multicast unit 151 receives a composite pilot signal associated with a first set of subscribers. The composite pilot signal may result from pilot sequences sent by the first set of subscriber units. According to at least one example embodiment, the pilot sequences forming the composite pilot signal are the same for each subscriber unit in the first set, apart from amplitude factors, and are associated with one program from among a plurality of programs. Namely, the first set of subscriber units have each requested that same program, and send the same pilot sequence, but with potentially different amplitude factors. As will be appreciated, the multicast unit 151 may receive several such composite pilot signals, each associated with a different program. However, for ease of description, the processing associated with one composite pilot signal for a selected program.

In step S320, the multicast unit 151 determines a composite channel estimate. In general, a channel estimate may be a transfer function that characterizes a particular channel between a transmitter and a receiver. For example, the channel estimate may include channel state information (CSI) that describes the combined effects of scattering, fading, power decay over distance, etc. as a signal propagates over the channel between the transmitter and the receiver. As is well known in the art, channel estimates are used to adapt transmissions based on current channel conditions. The composite channel estimate may be a linear combination of channel estimates for the multiplicity of subscriber units who desire the same program. According to at least one example embodiment, the multicast unit 151 may determine, using any well-known manner of determining channel estimates, the composite channel estimate based on the composite pilot signal and the assigned pilot sequence for the selected program.

In step S330, the multicast unit 151 transmits the selected program based on the determined composite channel estimate. Concurrent with step S330, the multicast unit 151 may perform beam forming for transmitting the selected program using an array of transmit antennas In general, beam forming based on channel estimates is well known in the art. According to at least one example embodiment, however, multicast unit 151 performs the beam forming, in any well-known manner, using the composite channel estimate for the selected program.

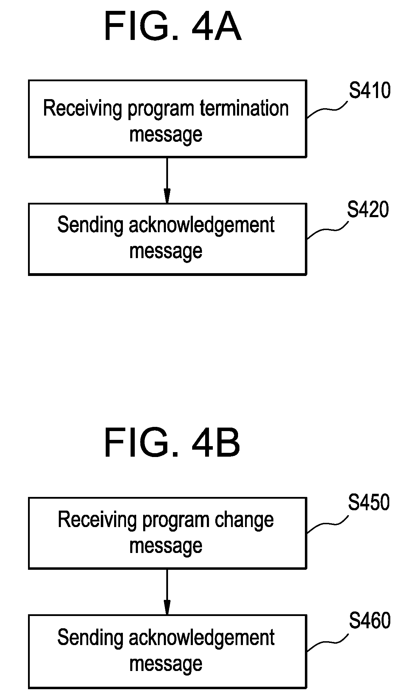

While Fig. 3 has been described in detail above with respect to one program, it will be readily understood that the multicast unit 151 may receive a plurality of composite pilot signals, each associated with a different program. And, the multicast unit 151 may perform the method of Fig. 3 as well as the methods of Figs. 4-6 below with respect to each program. The operations with respect to each program may be performed in parallel.

Fig. 4A is a flow chart illustrating an example operation of a multicast unit in Fig. 1, according to at least one example embodiment. As shown, in step S410, the multicast unit 151 may receive a program termination message from a subscriber unit. The program termination message indicates the subscriber unit no longer wants to receive the requested program. In response, the multicast unit 151 sends an acknowledgement message in step S420. In one embodiment, the multicast unit 151 may also send the anti-pilot sequence associated with the program being terminated for the subscriber unit. In response to the acknowledgement message, the subscriber unit will send the anti-pilot sequence. As will be appreciated, the multicast unit 151 may receive and respond to several program termination messages from different subscribers.

Fig. 4B is a flow chart illustrating an example operation of a multicast unit in Fig. 1, according to at least one example embodiment. As shown, in step S450, the multicast unit 151 receives a program change message from a subscriber unit. The program change message indicates that the subscriber units want to terminate receiving a currently requested program, and begin receiving a new program. The program change message also indicated the new program being requested. In response, the multicast unit 151 sends an acknowledgement message in step S460. In one embodiment, the multicast unit 151 may also send the anti-pilot sequence associated with the program being terminated for the subscriber unit. In response to the acknowledgement message, the subscriber unit will send the anti-pilot sequence of the old program and send the pilot sequence of the newly requested program. As will be appreciated, the multicast unit 151 may receive and respond to several program change messages from different subscribers.

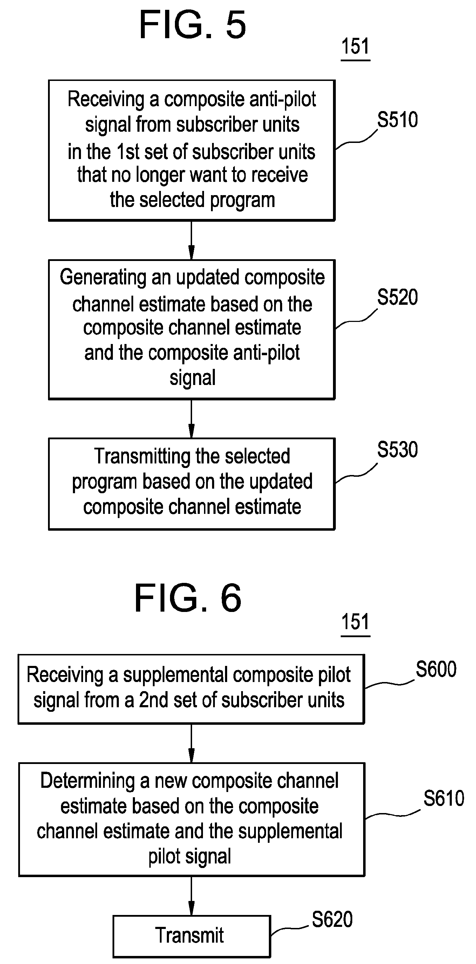

Fig. 5 is a flow chart illustrating an example operation of the multicast unit in Fig. 1, according to at least one example embodiment. The below described steps in Fig. 5 may be performed in combination with any or all of the steps in Figs. 2A-4B. Fig. 5 describes an example operation of the multicast unit 151 if one or more subscriber units in a first set of subscriber units no longer wish to receive a particular program (e.g., termination of receipt of the program, change to another program, etc.).

In step S510, multicast unit receives a composite anti-pilot signal. The composite anti-pilot signal may result from anti-pilot sequences sent by subscriber units in the first set of subscriber units that no longer want to receive a particular program. According to at least one example embodiment, the anti-pilot sequences are the same, apart from amplitude factors, for each subscriber unit that desires to no longer receive the program. Further, the anti-pilot sequences may have an opposite sign or be an arithmetic opposite of the assigned pilot sequence for the program.

In step S520, the multicast unit 151 generates, in any well-known manner of generating channel estimates, an updated composite channel estimate for the program based on the composite channel estimate and the composite anti-pilot signal.

In any well-known manner, the multicast unit 151 generates an composite anti-channel estimate based on the composite anti-pilot signal and the assigned pilot sequence for the program. And, the multicast unit 151 generates the updated channel estimate based on the composite channel estimate and the composite anti-channel estimate. For example, the multicast unit 151 arithmetically combines (e.g., adds) the composite channel estimate and the composite anti-channel estimate. Accordingly, the updated composite channel estimate no longer takes into account those subscriber units that changed from the selected program to a different program or terminated receipt of the selected program.

In step S530, the multicast unit transmits the selected program based on the updated composite channel estimate. As a result of the multicast unit 151 performing steps S510-S530, one or more of the subscriber units in the first set no longer receive the selected program, but the subscriber units in the first set that did not terminate receipt of the selected program still receive the selected program.

Fig. 6 is a flow chart illustrating an example operation of the multicast unit in Fig. 1, according to at least one example embodiment. The below described steps in Fig. 6 may be performed in combination with any or all of the steps in Figs. 2A-5. Fig. 6 describes an example operation of the multicast unit 151 if a second set of subscriber units wish to receive the selected program such as described with respect to Fig. 3 (e.g., the second set of subscriber units wish to start receiving the selected program being received by the first set of subscriber units, change from receiving a different program to receiving the selected program being received by the first set of subscriber units, etc.).

In step S600, the multicast unit 151 receives a supplemental composite pilot signal. The supplemental composite pilot signal may results from pilot sequences sent by the second set of subscriber units. The pilot sequences sent by the second set of subscriber units may be the same, apart from amplitude factors, and may be associated with the selected program. The subscriber units or unit in the second set may be different from the first set of subscriber units described in Figs. 3-5.

In step S610, the multicast unit 151 determines a supplemental composite channel estimate in the same manner as described above with respect to step S320 (e.g., in any well-known manner for determining channel estimates), and generates a new channel estimate.

For example, if a subset of the first set of subscriber units has already changed from the selected program, the multicast unit 151 determines the new composite channel estimate based on the updated composite channel estimate (from step S520) and the supplemental composite channel estimate. For example, the multicast unit 151 arithmetically combines (e.g., adds) the updated composite channel estimate and the supplemental composite channel estimate to obtain the new composite channel estimate. In another embodiment, if all of the first set of subscriber units are still receiving the selected program, the multicast unit 151 determines the new composite channel estimate based on the composite channel estimate from step S330 and the supplemental composite channel estimate. For example, the multicast unit 151 arithmetically combines (e.g., adds) the composite channel estimate and the supplemental composite channel estimate to obtain the new composite channel estimate.

The multicast unit 151 then, in step S620, transmits the program according to the new composite channel estimate in the same manner as discussed above with respect to step S340.

By way of further explanation, the operation of a multicast unit 151 according to one or more of the steps described in Figs. 2A-6 is discussed below in the context of a specific example.

According to a specific example of at least one example embodiment, unique orthogonal pilot sequences are assigned, not to subscriber units, but rather to each HDTV program that is available over a service provider's network. For example, in at least one example embodiment, an HDTV program (e.g., the "Muppets") has an assigned unique pilot sequence. Every subscriber unit that wishes to watch the "Muppets" transmits that same pilot sequence, apart from amplitude factors, such that a multicast unit (e.g., a multicast LSAS service-antenna) receives a composite pilot signal. The multicast unit then generates one composite channel estimate for all of the subscriber units that want to receive the "Muppets", which constitutes a linear combination of channel estimates to those same subscriber units. During the down-link transmission of data, a linear pre-coding (beam-forming) operation effectively transmits the "Muppets" data using the composite channel estimate, so that a fraction of the signal is selectively sent to each of the subscriber units that want the "Muppets."

In conventional LSAS, the re-use of pilot sequences is avoided because of the "pilot contamination" effect, which creates directed interference. However, at least one example embodiment takes advantage of pilot contamination to send the same data to multiple subscriber units.

According to at least one example embodiment, subscriber units transmit new up-link pilot sequences at sufficient intervals to accommodate significant changes in the propagation channels. However, channel-changing also requires sending new up-link pilot sequences. A change of channels should occur rapidly (within about 250 milliseconds) to reduce an amount of time a subscriber waits for a new channel to appear after changing from an initial channel to a new channel. Therefore, according to at least one example embodiment, subscriber units may re-send their pilot sequences at intervals of about 250 milliseconds. Furthermore, if "anti-pilots" are employed as described above, then only the subscribers who are changing channels may transmit pilot signals at the shorter 250 millisecond interval. Here, the advantage is that uplink transmission resources of the subscriber units are conserved, typically permitting more time to be spent on downlink data transmission.

Suppose that subscriber number one has been watching the "Muppets", but now wants to watch the "Rifleman." To bring this about, subscriber number one may transmit two pilot sequences simultaneously. These two pilot sequences may be transmitted in synchronization with pilot signals from other subscriber units that also wish to change from the "Muppets" to the "Rifleman." One of the pilot sequences contains the unique pilot sequence that is associated with "The Rifleman," while the other pilot sequence contains an "anti-pilot" signal sequence associated with the "Muppets."

According to at least one example embodiment, the anti-pilot sequence is an algebraic opposite (minus-one-times) of the unique pilot sequence for the "Muppets." The multicast unit correlates the received pilot sequences with each unique pilot sequence of the two programs, and generates a composite channel estimate for "Rifleman" and a new composite channel estimate for "Muppets." Then, the multicast unit algebraically adds the new "Muppets" composite channel estimate to the old "Muppets" composite channel estimate (recall that the old "Muppets" composite channel estimate is for the former "Muppets" recipients), which cancels-out the "Muppets" composite channel estimate to subscriber number one. The algebraic addition of the new "Rifleman" composite channel estimate to the old "Rifleman" composite channel estimate causes subscriber number one to now receive "The Rifleman."

In order for cancellation of the "Muppets" composite channel estimate to occur, the amplitude of the composite anti-pilot signal should be carefully calculated. For example, the amplitude of the anti-pilot sequence may be calculated from known slow-fading coefficients.

At least one example embodiment also provides a mechanism for transmission power control on the uplink between subscriber units and multicast units. Inventive concepts relating to up-link power control are described in a general sense below with reference to Figs. 1-3.

According to at least one example embodiment, the multicast unit 151 receives a request from the subscriber units (e.g., the first set of subscriber units). If the request is a request for the selected program, or a request to change from the selected program to a new program, then the multicast unit 151 informs the subscriber units to adjust a transmission power of the pilot sequences (e.g., the pilot sequences that make up the composite pilot signal from step S310) according to transmission attenuation factors associated with each subscriber unit. The transmission attenuation factors may include, but are not limited to, a distance between a subscriber unit and the multicast unit 151 and/or shadow fading. According to at least one example embodiment, the attenuation factors are based on signal characteristics (e.g., amplitude, phase, etc.) of each subscriber unit's uplink transmission to the multicast unit 151.

By way of further explanation, inventive concepts with respect to power control are described below with reference to the "Muppets" example.

Among the subscriber units that are receiving the "Muppets," some will be close to the multicast unit, and others will be far away. However, it is still desirable to ensure that all of the subscribers receive the same quality signal. Power control on the uplink pilot transmissions may accomplish the desired effect.

For example, the near subscribers transmit a pilot sequence with a reduced power compared to the transmission power of the far subscribers. On the downlink, less transmission power is expended on the near subscribers than on the far subscribers such that the signal is received with the same quality by all of the subscribers. The power levels for uplink transmission may depend on the slow-fading coefficients (calculated from, for example, shadow fading), which can be estimated over periods of time much longer than the coherence interval.

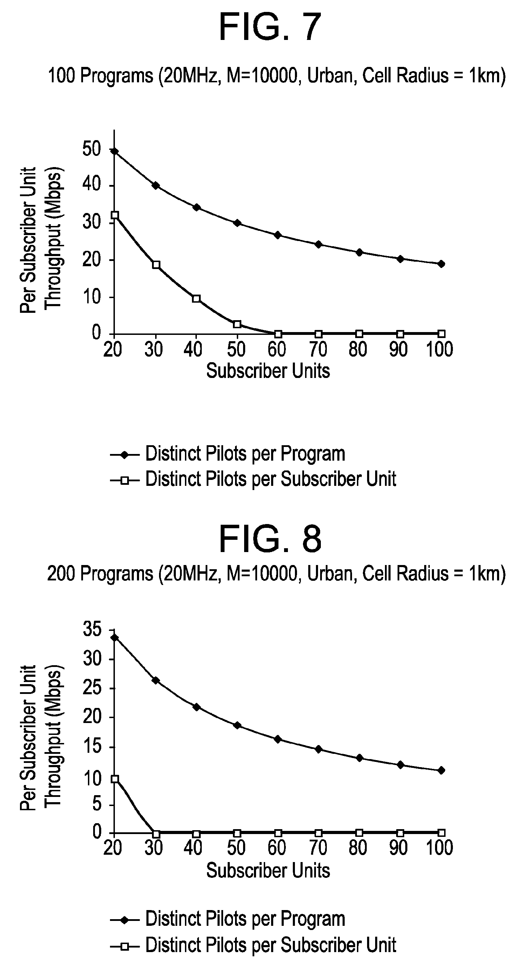

Figs. 7 and 8 are graphs comparing per subscriber unit throughput using a conventional LSAS scheme to per subscriber unit throughput using a LSAS scheme according to at least one example embodiment.

Figs. 7 and 8 illustrate two examples showing benefits of a multicast scheme according to at least one example embodiment. In Figs. 7 and 8, the following parameters are assumed for convenience of explanation.

- Multicast unit total radiated power = 40 Watts
- Multicast unit antenna gains = 0 dBi
- Multicast unit height = 50 meters
- Multicast unit receiver noise figure = 9 dB
- Subscriber unit amplifier power = 1 Watt
- Subscriber unit antenna gain = 3dBi (dual-antenna)
- Subscriber unit antenna height = 1.5 meters

- Subscriber unit noise figure = 9 dB
- Number of samples in coherence interval (28 milliseconds) = 14*14*28 = 5488
- Number of antennas in multicast unit = 100*100 = 10,000
- Carrier bandwidth = 20 MHz
- Carrier frequency = 750 MHz
- RF propagation = Hata Urban model
- Slow fading standard deviation = 8 dB
- Power control = equal throughput among all terminals
- Cell radius = 1 kilometer

Figs. 7 and 8 illustrate a throughput per subscriber unit for a multicast LSAS scheme (as in at least one example embodiment) compared to a throughput per subscriber unit for a conventional LSAS scheme. For example, Fig. 7 shows a comparison for a case when there are 100 broadcast programs. As another example, Fig. 8 shows the throughput comparison for a case when there are 200 broadcast programs. In Figs. 7 and 8, one curve shows the throughput per subscriber unit when subscriber units receiving a same program use a same unique pilot sequence of the program (as in at least one example embodiment) whereas the other curve shows the throughput per subscriber unit when distinct pilots are used for every subscriber, even among the subscribers receiving the same programs (as in conventional LSAS). As illustrated by Figs. 7 and 8, conventional systems do not allow as many subscriber units per program because more resources are expended on reverse link pilot based channel estimations.

The throughput gain of a scheme according to an example embodiment is approximately equal to the gain in savings on the reverse link pilot overhead:

$$\text{Throughput} \quad \text{Gain} \quad \approx \quad \frac{1 - J/T}{1 - K/T}$$

where J is the number of multicast programs, T is the number of symbols in a coherence interval, and *K* is the total number of users.

An added advantage a scheme according to at least one example embodiment is that most of the subscribers do not transmit reverse link pilots with full power due to the reverse link power control, whereas in the conventional scheme (i.e., "distinct pilots per subscriber"), all the subscriber units transmit reverse link pilots with full power to achieve optimal channel estimations. Thus, a system according to at least one example embodiment also saves subscriber unit power.

Devices and/or methods for assigning unique pilot sequences to programs of a service provider in a multicast large scale antenna system (LSAS) have been described above. Advantages associated with the above described example embodiments include but are not limited to: allowing a relatively large number of subscribers to be simultaneously served by the system; reducing power consumption and time spent on the uplink transmission, which may allow more time to be spent on downlink transmission such that a high quality signal is provided to each subscriber; and reducing time spent waiting for the system to change channels.

Variations of the example embodiments are not to be regarded as a departure from the scope of the inventive concepts disclosed herein. All such variations as would be apparent to one skilled in the art are intended to be included within the scope of this disclosure.

**Claims**

1. A method for supporting multicast for large scale antenna systems, the method comprising:

   assigning (S210) a pilot sequence to each program from among a plurality of programs such that each program has a unique pilot sequence; and
   broadcasting (S220) the unique pilot sequences for the plurality of programs.

2. The method of claim 1, wherein the assigning (S210) assigns the unique pilot sequences such that the unique pilot sequences are orthogonal to one another.

3. The method of claim 1, further comprising:

   broadcasting an anti-pilot sequence for at least one of the unique pilot sequences, the anti-pilot sequence having a sign opposite of the at least one of the unique pilot sequences.

4. The method of claim 3, wherein the broadcasting the anti-pilot sequence is performed in response to a trigger from a subscriber unit.

5. A multicast (151) unit provided with large arrays of service-antennas configured to:

   assign (S210) a pilot sequence to each program from among a plurality of programs such that each program has a unique pilot sequence; and
   broadcast (S220) the unique pilot sequences for the plurality of programs.

6. A method for multicast for large scale antenna systems, the method comprising:

   receiving (S310) a composite pilot signal associated with a first set of subscriber units, the composite pilot signal resulting from pilot sequences sent by the first set of subscriber units, the pilot sequences sent by the first set of subscriber units being the same apart from amplitude factors and associated with a particular one of a plurality of programs;
determining (S320) a composite channel estimate based on the composite pilot signal and the assigned pilot sequence for the particular program; and
transmitting (S330) the particular program based on the determined composite channel estimate.

7. The method of claim 6, further comprising:

receiving (S510) a composite anti-pilot signal, the composite anti-pilot signal resulting from anti-pilot sequences sent by at least one of the subscriber units in the first set of subscriber units that no longer wants to receive the selected program, the anti-pilot sequences being the same apart from amplitude factors and having a sign opposite of the assigned pilot sequence for the particular program;
generating (S520) an updated composite channel estimate based on the composite channel estimate and the composite anti-pilot signal; and
transmitting (S530) the selected program based on the updated composite channel estimate.

8. The method of claim 7, further comprising:

receiving (S410) a message from at least one of the subscriber units in the first set of subscriber units, the message indicating that the at least one subscriber unit wants to terminate receipt of the particular program.

9. The method of claim 7, further comprising:

receiving (S600) a supplemental composite pilot signal, the supplemental composite pilot signal resulting from pilot sequences sent by a second set of subscriber units, the pilot sequences of the second set of subscriber units being the same apart from amplitude factors and associated with the particular program, the subscriber units or unit in the second set being different from the subscriber units in the first set; and
determining (S610) a new composite channel estimate based on the updated composite channel estimate and the supplemental composite pilot signal.

10. The method of claim 6, further comprising:

receiving (S600) a supplemental composite pilot signal, the supplemental composite pilot signal resulting from pilot sequences sent by a second set of subscriber units, the pilot sequences of the second set of subscriber units being the same apart from amplitude factors and associated with the particular program, the subscriber units or unit in the second set being different from the subscriber units or unit in the first set; and
determining (S610) a new composite channel estimate based on the composite channel estimate and the supplemental composite pilot signal.

11. A multicast (151) unit provided with large arrays of service-antennas configured to:

receive (S310) a composite pilot signal associated with a first set of subscriber units, the composite pilot signal resulting from pilot sequences sent by the first set of subscriber units, the pilot sequences sent by the first set of subscriber units being the same apart from amplitude factors and associated with a particular one of a plurality of programs;
determine (S320) a composite channel estimate based on the composite pilot signal and the assigned pilot sequence for the particular program; and
transmit (S330) the particular program based on the determined composite channel estimate.

12. A program code or code segments to perform one of the methods of 30 claims 1 to 4 or 6 to 10 when executed in a computer.

**Patentansprüche**

1. Verfahren zur Multicast-Unterstützung für großräumige Antennensysteme, wobei das Verfahren Folgendes umfasst:

Zuweisen (S210) einer Pilotsequenz an jedes Programm unter einer Vielzahl von Programmen, so dass jedes Programm eine eindeutige Pilotsequenz hat; und
Rundsenden (S220) der eindeutigen Pilotsequenzen für die Vielzahl von Programmen.

2. Verfahren nach Anspruch 1, wobei das Zuweisen (S210) die eindeutigen Pilotsequenzen zuweist, so dass die eindeutigen Pilotsequenzen orthogonal zueinander sind.

3. Verfahren nach Anspruch 1, weiterhin umfassend:

Rundsenden einer Anti-Pilotsequenz für mindestens eine der eindeutigen Pilotsequenzen, wobei die Anti-Pilotsequenz ein Zeichen gegenüber der mindestens einen der eindeutigen Pilotsequenzen aufweist.

**4.** Verfahren nach Anspruch 3, wobei das Rundsenden der Anti-Pilotsequenz als Antwort auf einen Auslöser von einer Teilnehmereinheit erfolgt.

**5.** Multicast-Einheit (151), die mit großen Dienstantennen-Arrays ausgestattet ist, ausgelegt zum:

Zuweisen (S210) einer Pilotsequenz an jedes Programm unter einer Vielzahl von Programmen, so dass jedes Programm eine eindeutige Pilotsequenz hat; und
Rundsenden (S220) der eindeutigen Pilotsequenzen für die Vielzahl von Programmen.

**6.** Multicast-Verfahren für großräumige Antennensysteme, wobei das Verfahren Folgendes umfasst:

Empfangen (S310) eines zusammengesetzten Pilotsignals, das einer ersten Gruppe von Teilnehmereinheiten zugeordnet ist, wobei das zusammengesetzte Pilotsignal aus Pilotsequenzen hervorgeht, die von der ersten Gruppe von Teilnehmereinheiten gesendet werden, wobei die Pilotsequenzen, die von der ersten Gruppe von Teilnehmereinheiten gesendet werden, mit Ausnahme von Amplitudenfaktoren die gleichen sind und einem bestimmten aus einer Vielzahl von Programmen zugeordnet sind;
Bestimmen (S320) einer zusammengesetzten Kanalschätzung basierend auf dem zusammengesetzten Pilotsignal und der zugewiesenen Pilotsequenz für das bestimmte Programm; und
Senden (S330) des bestimmten Programms basierend auf der bestimmten zusammengesetzten Kanalschätzung.

**7.** Verfahren nach Anspruch 6, weiterhin umfassend:

Empfangen (S510) eines zusammengesetzten Anti-Pilotsignals, wobei das zusammengesetzte Anti-Pilotsignal aus Anti-Pilotsequenzen hervorgeht, die von mindestens einer der Teilnehmereinheiten in der ersten Gruppe von Teilnehmereinheiten gesendet werden, die das gewählte Programm nicht mehr empfangen möchte, wobei die Anti-Pilotsequenzen mit Ausnahme von Amplitudenfaktoren die gleichen sind und ein Zeichen gegenüber der zugeordneten Pilotsequenz für das bestimmte Programm aufweisen;
Erzeugen (S520) einer aktualisierten zusammengesetzten Kanalschätzung basierend auf der zusammengesetzten Kanalschätzung und dem zusammengesetzten Anti-Pilotsignal; und
Senden (S530) des gewählten Programms basierend auf der aktualisierten zusammengesetzten Kanalschätzung.

**8.** Verfahren nach Anspruch 7, weiterhin umfassend:

Empfangen (S410) einer Nachricht von mindestens einer der Teilnehmereinheiten in der ersten Gruppe von Teilnehmereinheiten, wobei die Nachricht angibt, dass die mindestens eine Teilnehmereinheit den Empfang des bestimmten Programms beenden möchte.

**9.** Verfahren nach Anspruch 7, weiterhin umfassend:

Empfangen (S600) eines zusätzlichen zusammengesetzten Pilotsignals, wobei das zusätzliche zusammengesetzte Pilotsignal aus Pilotsequenzen hervorgeht, die von einer zweiten Gruppe von Teilnehmereinheiten gesendet werden, wobei die Pilotsequenzen der zweiten Gruppe von Teilnehmereinheiten mit Ausnahme von Amplitudenfaktoren die gleichen sind und dem bestimmten Programm zugeordnet sind, wobei sich die Teilnehmereinheiten oder -einheit in der zweiten Gruppe von den Teilnehmereinheiten in der ersten Gruppe unterscheiden; und
Bestimmen (S610) einer neuen zusammengesetzten Kanalschätzung basierend auf der aktualisierten zusammengesetzten Kanalschätzung und dem zusätzlichen zusammengesetzten Pilotsignal.

**10.** Verfahren nach Anspruch 6, weiterhin umfassend:

Empfangen (S600) eines zusätzlichen zusammengesetzten Pilotsignals, wobei das zusätzliche zusammengesetzte Pilotsignal aus Pilotsequenzen hervorgeht, die von einer zweiten Gruppe von Teilnehmereinheiten gesendet werden, wobei die Pilotsequenzen der zweiten Gruppe von Teilnehmereinheiten mit Ausnahme von Amplitudenfaktoren die gleichen sind und dem bestimmten Programm zugeordnet sind, wobei sich die Teilnehmereinheiten oder -einheit in der zweiten Gruppe von den/der Teilnehmereinheit/en in der ersten Gruppe unterscheiden; und
Bestimmen (S610) einer neuen zusammengesetzten Kanalschätzung basierend auf der zusammengesetzten Kanalschätzung und dem zusätzlichen zusammengesetzten Pilotsignal.

**11.** Multicast-Einheit (151) die mit großen Dienstantennen-Arrays ausgestattet ist, ausgelegt zum:

Empfangen (S310) eines zusammengesetzten Pilotsignals, das einer ersten Gruppe von Teilnehmereinheiten zugeordnet ist, wobei das zusammengesetzte Pilotsignal aus Pilotsequenzen hervorgeht, die von der ersten Gruppe von Teilnehmereinheiten gesendet werden, wobei die Pilotsequenzen, die von der ersten Gruppe von Teilnehmereinheiten gesendet werden, mit Ausnahme von Amplitudenfaktoren die gleichen sind und einem bestimmten aus einer Vielzahl von Programmen zugeordnet sind;
Bestimmen (S320) einer zusammengesetzten Kanalschätzung basierend auf dem zusammengesetzten Pilotsignal und der zugewiesenen Pilotsequenz für das bestimmte Programm; und
Senden (S330) des bestimmten Programms basierend auf der bestimmten zusammengesetzten Kanalschätzung.

12. Programmcode oder Codesegmente zum Durchführen von einem der Verfahren nach Anspruch 1 bis 4 oder 6 bis 10 bei Ausführung in einem Computer.

**Revendications**

1. Procédé pour prendre en charge une multidiffusion pour des systèmes d'antennes à grande échelle, le procédé comprenant les étapes suivantes :

   attribuer (S210) une séquence pilote à chaque programme parmi une pluralité de programmes de sorte que chaque programme possède une séquence pilote unique ; et
   diffuser (S220) les séquences pilotes uniques pour la pluralité de programmes.

2. Procédé selon la revendication 1, dans lequel l'attribution (S210) attribue les séquences pilotes uniques de sorte que les séquences pilotes uniques soient orthogonales les unes par rapport aux autres.

3. Procédé selon la revendication 1, comprenant en outre l'étape suivante :

   diffuser une séquence anti-pilote pour au moins une des séquences pilotes uniques, la séquence anti-pilote ayant un signe opposé à celui de l'au moins une des séquences pilotes uniques.

4. Procédé selon la revendication 3, dans lequel la diffusion de la séquence anti-pilote est réalisée en réponse à un déclenchement depuis une unité d'abonné.

5. Unité de multidiffusion (151) disposant de grands réseaux d'antennes de service configurée pour :

   attribuer (S210) une séquence pilote à chaque programme parmi une pluralité de programmes de sorte que chaque programme possède une séquence pilote unique ; et
   diffuser (S220) les séquences pilotes uniques pour la pluralité de programmes.

6. Procédé de multidiffusion pour des systèmes d'antennes à grande échelle, le procédé comprenant les étapes suivantes :

   recevoir (S310) un signal pilote composite associé à un premier ensemble d'unités d'abonné, le signal pilote composite étant le résultat de séquences pilotes envoyées par le premier ensemble d'unités d'abonné, les séquences pilotes envoyées par le premier ensemble d'unités d'abonné étant identiques, à l'exception des facteurs d'amplitude, et associées à un programme particulier parmi une pluralité de programmes ; déterminer (S320) une estimation de canal composite sur la base du signal pilote composite et de la séquence pilote attribuée pour le programme particulier ; et
   transmettre (S330) le programme particulier sur la base de l'estimation de canal composite déterminée.

7. Procédé selon la revendication 6, comprenant en outre les étapes suivantes :

   recevoir (S510) un signal anti-pilote composite, le signal anti-pilote composite étant le résultat de séquences anti-pilotes envoyées par au moins une des unités d'abonné dans le premier ensemble d'unités d'abonné qui ne veut plus recevoir le programme sélectionné, les séquences anti-pilotes étant identiques, à l'exception des facteurs d'amplitude, et ayant un signe opposé à celui de la séquence pilote attribuée pour le programme particulier ;
   générer (S520) une estimation de canal composite mise à jour sur la base de l'estimation de canal composite et du signal anti-pilote composite ; et
   transmettre (S530) le programme sélectionné sur la base de l'estimation de canal composite mise à jour.

8. Procédé selon la revendication 7, comprenant en outre l'étape suivante :

   recevoir (S410) un message provenant d'au moins une des unités d'abonné dans le premier ensemble d'unités d'abonné, le message indiquant que l'au moins une unité d'abonné souhaite arrêter la réception du programme particulier.

9. Procédé selon la revendication 7, comprenant en outre les étapes suivantes :

recevoir (S600) un signal pilote composite supplémentaire, le signal pilote composite supplémentaire étant le résultat de séquences pilotes envoyées par un deuxième ensemble d'unités d'abonné, les séquences pilotes du deuxième ensemble d'unités d'abonné étant identiques, à l'exception des facteurs d'amplitude, et associées au programme particulier, la ou les unités d'abonné dans le deuxième ensemble étant différentes des unités d'abonné dans le premier ensemble ; et

déterminer (S610) une nouvelle estimation de canal composite sur la base de l'estimation de canal composite mise à jour et du signal pilote composite supplémentaire.

10. Procédé selon la revendication 6, comprenant en outre les étapes suivantes :

recevoir (S600) un signal pilote composite supplémentaire, le signal pilote composite supplémentaire étant le résultat de séquences pilotes envoyées par un deuxième ensemble d'unités d'abonné, les séquences pilotes du deuxième ensemble d'unités d'abonné étant identiques, à l'exception des facteurs d'amplitude, et associées au programme particulier, la ou les unités d'abonné dans le deuxième ensemble étant différentes de la ou des unités d'abonné dans le premier ensemble ; et

déterminer (S610) une nouvelle estimation de canal composite sur la base de l'estimation de canal composite et du signal pilote composite supplémentaire.

11. Unité de multidiffusion (151) disposant de grands réseaux d'antennes de service configurée pour :

recevoir (S310) un signal pilote composite associé à un premier ensemble d'unités d'abonné, le signal pilote composite étant le résultat de séquences pilotes envoyées par le premier ensemble d'unités d'abonné, les séquences pilotes envoyées par le premier ensemble d'unités d'abonné étant identiques, à l'exception des facteurs d'amplitude, et associées à un programme particulier parmi une pluralité de programmes ;

déterminer (S320) une estimation de canal composite sur la base du signal pilote composite et de la séquence pilote attribuée pour le programme particulier ; et

transmettre (S330) le programme particulier sur la base de l'estimation de canal composite déterminée.

12. Code de programme ou segments de code pour mettre en oeuvre un des procédés des revendications 1 à 4 ou 6 à 10 lorsqu'il(s) est/sont exécuté(s) dans un ordinateur.

# FIG. 1

# FIG. 2A          151

Assigning a unique pilot sequence to each program          S210

↓

Broadcasting the unique pilot sequences of the programs          S220

# FIG. 2B

Receiving program request message          S250

↓

Sending acknowledgement message          S260

151

# FIG. 3

Receiving a composite
pilot signal associated
with a 1st set of
subscriber units
— S310

Determining a composite
channel estimate based
on the composite pilot
signal and the assigned
pilot sequence for the
selected program
— S320

Transmitting the selected
program based on the
determined composite
channel estimate
— S330

# FIG. 4A

```
┌────────────────────────────────┐
│  Receiving program termination │  ⟋ S410
│            message             │
└────────────────────────────────┘
                │
                ▼
┌────────────────────────────────┐
│    Sending acknowledgement     │  ⟋ S420
│            message             │
└────────────────────────────────┘
```

# FIG. 4B

```
┌────────────────────────────────┐
│    Receiving program change    │  ⟋ S450
│            message             │
└────────────────────────────────┘
                │
                ▼
┌────────────────────────────────┐
│    Sending acknowledgement     │  ⟋ S460
│            message             │
└────────────────────────────────┘
```

# FIG. 5

151

Receiving a composite anti-pilot signal from subscriber units in the 1st set of subscriber units that no longer want to receive the selected program — S510

Generating an updated composite channel estimate based on the composite channel estimate and the composite anti-pilot signal — S520

Transmitting the selected program based on the updated composite channel estimate — S530

# FIG. 6

151

Receiving a supplemental composite pilot signal from a 2nd set of subscriber units — S600

Determining a new composite channel estimate based on the composite channel estimate and the supplemental pilot signal — S610

Transmit — S620

# FIG. 7

100 Programs (20MHz, M=10000, Urban, Cell Radius = 1km)

—♦— Distinct Pilots per Program
—□— Distinct Pilots per Subscriber Unit

# FIG. 8

200 Programs (20MHz, M=10000, Urban, Cell Radius = 1km)

—♦— Distinct Pilots per Program
—□— Distinct Pilots per Subscriber Unit

**EP 2 939 365 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090210474 A1

**Non-patent literature cited in the description**

- **ASHIKHMIN et al.** Pilot Contamination Precoding in Multi-Cell Large Scale Antenna Systems. *TDD LSAS systems*